# EUROPEAN PATENT APPLICATION

(11) **EP 4 844 410 A1**
(43) Date of publication of application: **25.11.2026**
(21) Application number: 25178548.1
(22) Date of filing: 23.05.2025
(51) Int. Cl.: G01N 35/00, E06B 9/00, E06B 7/36, A47H 23/02

(54) **A GAP CLOSING DEVICE FOR AN AUTOMATED LABORATORY SYSTEM**

(71) Applicant: Beckman Coulter, Inc., Brea, CA 92821 (US)
(72) Inventor: BRUGGAIER, Christoph F., Brea, CA 92821 (US)
(74) Representative: Paustian & Partner Patentanwälte mbB

(57) **Abstract**

The invention relates to a gap closing device for an automated laboratory system, ALS, for closing a gap between a first component and an adjacent second component of the ALS, comprising:
at least one attachment portion configured to be attached to a surface of the first component, such that the gap is at least partially closed by the gap closing device, and
a configurable closing portion protruding from the attachment portion and
comprising (or consisting of) a plurality of closing units, each being configured to be removable from the gap closing device, such that the dimensions of the closing portion can be adapted to the dimensions of the gap.

## Description

The present disclosure relates to a gap closing device for an automated laboratory system and a method of closing a gap between a first component and an adjacent second component of automated laboratory system using a gap closing device.

Typically, Automated Laboratory Systems (ALSs) are assemblies comprising a plurality of components which allow for processing (e.g., testing) biological samples contained in respective sample containers. Sample containers are typically used for holding samples to be tested, e.g., biological samples (for instance blood samples) drawn from a human or animal subject. An opening of the sample container may be closable, e.g. sealed, by a cap.

The components may for example include at least one of pre-processing components (e.g., an input region for inserting sample containers in the ALS, a decapper, a centrifuge, an aliquoter), a processing portion (e.g. laboratory analyzers for analysing a biological sample contained in the container) and a post-processing component (e.g., a storage unit for storing sample containers).

Moreover, transportation components, e.g. in the form of a conveyor system, may allow for moving sample containers from one component to another. The transportation components may include one or more tracks, one or more belts and/or container carriers configured to move biological samples contained in sample containers.

The components of the ALS, e.g. the laboratory analyzers, may originate in some cases from different manufacturers what requires that the ALS is adapted to integrate different types of analyzers.

The laboratory analyzers are configured to perform at least one type of clinical diagnostic test on biological samples. To enable this, the analyzers are physically and/or functionally arranged on one side of the transportation components and are operatively connected to them. This connection may be mechanical, e.g., via standardized docking interfaces. A robotic handling system, such as a multi-axis robotic arm, is positioned and controlled in such a way that it can extract a portion (aliquot) of the biological sample from a sample container and transfer it a laboratory analyzer. The analyzer then automatically carries out diagnostic or analytical procedures based on predefined test protocols.

The laboratory analyzers may be configured to carry out clinical tests. For this purpose, the laboratory analyzers are arranged on a side of the transportation components and connected to them, such that e.g. a robotic handling system (e.g. a robotic arm) arm can transport a portion of the biological sample contained in the sample container into the laboratory analyzer to make tests on it.

There are safety regulations which shall protect users of the Automated Laboratory Systems (ALSs), e.g. from not accessing any critical areas as the robotic arm to prevent them from being injured and/or to damage parts of the ALS, e.g. the robotic arm, or from contaminating the biological samples.

A first aspect of the present disclosure refers to a gap closing device for an automated laboratory system, ALS, for closing a gap between a first component and an adjacent second component of the ALS, comprising:
at least one attachment portion configured to be attached to a surface of the first component, such that the gap is at least partially closed by the gap closing device, and a configurable closing portion protruding from the attachment portion and comprising (or consisting of) a plurality of closing units, each being configured to be removable from the gap closing device, such that the dimensions of the closing portion can be adapted to the dimensions of the gap.

Accordingly, the configurable closing portion may be adjustable to adapt to the gap by removing one or several closing units. In particular, the closing portion may be customized such that a remaining gap (i.e. after attachment of the customized gap closing device) may be small enough to block a human finger to access the gap.

Laboratory analyzers (and other processing components) integrated into an ALS may originate from different manufacturers and exhibit varying mechanical interfaces. As such, the ALS may be designed with a high degree of interoperability and modularity to support seamless integration of heterogeneous analyzer types. The laboratory analyzers are typically positioned on one side of the transportation components of the Automated Laboratory System (ALS) and are operatively connected to it. This connection may include both physical alignment (e.g., docking stations, transfer ports) and mechanical interfacing (e.g., using a robotic handling system, such as a multi-axis robotic arm, for extracting a portion (aliquot) of the biological sample from a sample container and transfer it a laboratory analyzer). However, due to the diversity in form factors, mechanical designs, and interface specifications across different manufacturers, residual physical and functional gaps can remain between the analyzers and the ALS components. These gaps may relate to positioning tolerances, access points for sample transfer, or incompatibilities in sample handling protocols.

Furthermore, automated Laboratory Systems (ALSs) are subject to stringent safety regulations designed to protect human operators as well as the integrity of the system and biological samples. These regulations aim to prevent user access to hazardous zones-such as the operational area of the robotic handling system-to reduce the risk of injury or unintended contact with moving mechanical components. Additionally, safety measures help prevent accidental damage to system components (e.g., robotic manipulators, analyzers) and avoid contamination of the biological samples. Safety mechanisms may include physical enclosures such as covers to protect the mechanical interface (i.e. where the robotic handling system is located) between the laboratory analyzer and the transport components.

However, developing customized covers for each possible combination of laboratory analyzers (or other processing components) and transport components can be complex and expensive.

The present disclosure thus proposes a simple and inexpensive, yet effective and highly customizable solution to at least partially close gaps between the device, such that users can be prevented from undesirably entering the gaps with e.g. their fingers.

The first and second components of the ALS comprise e.g. a laboratory analyzer or a part of laboratory analyzer (such as a protection cover of the laboratory analyzer) and a transportation component for transporting a sample container across the ALS.

The attachment portion may be on one side of the gap closing device.

The attachment portion may also be referred to as a base portion or attachment base

The closing portion may also be referred to as a blocking portion.

The closing units may have a standardized shape or varying shapes, as explained in more detail below.

The dimensions of the closing portion may comprise the shape and/or size of the closing portion. Likewise, the dimensions of the gap may comprise the shape and/or size of the gap.

In other words, each of the plurality of closing units may be configured to be removable from the gap closing device, such that the shape of the closing device can be adapted to the shape of the gap.

Each closing unit may be removably attached to the attachment portion, e.g. fixed or mounted, i.e. firmly or rigidly connected, as also explained in more detail below.

The closing portion may substantially have a flat form and/or span a first plane.

The attachment portion may substantially have a flat form and/or span a second plane.

The first and second planes may be substantially parallel to each other or may be angled relative to each other, e.g. at 90° or at a value between 45° and 80°.

Providing such an angle (i.e. inclination) may allow to adapt to various mounting situations. For example, in a gap closing system, as described below, a plurality of gap closing devices with different angles may be provided.

The attachment portion may be configured to be removably attachable to a surface of the first component.

The attachment portion may have an attachment surface configured to be fixed to a surface of the first component, optionally by self-adhesive properties of the attachment surface and/or by a screw connection.

The attachment portion may also be bendable and thus be attachable onto bent surfaces.

The closing portion may comprise a plurality of closing bars, each protruding from the attachment portion, wherein each closing bar may comprise a plurality of closing units attached to each other in series.

The closing bars may also be referred to as teeth or fingers.

In other words, closing portion may comprise a plurality of segmented closing bars, wherein each segment forms a closing unit.

The closing bars may be substantially arranged in parallel to each other and/or perpendicular to the attachment portion. The closing device may thus substantially have a comb-like shape

In other words, the gap closing device may have a comb-liked shape, wherein the attachment portion forms a base of the comb and the closing bars form teeth of the comb, optionally each closing bar being formed by a series of connected closing units.

In still other words, a plurality of closing units may be attached in series to each other to form a bar protruding from the attachment portion.

The closing bars may have chamfered ends to facilitate engagement of the bars of facing closing devices.

The closing units may form a series of intersecting bars. The closing units may also form a regular and/or repeated pattern, optionally creating a network of openings. The closing units may also form a honeycomb structure and/or a grid structure.

Accordingly, these structures (i.e. intersecting bars or patterns) may be linear (parallel bars), rectangular (grid-like meshes), or hexagonal (honeycomb patterns).

The closing portion may comprise at least one opening between adjacent closing bars, i.e. a spacing. In other words, the closing units or the closing bars may be spaced to each other. The openings may allow air ventilation between the devices of the ALS for heat dissipation.

These openings may be present by default, i.e. even when no closing unit has been removed yet.

The closing portion may also be configured, such that an opening in the closing portion can be obtained by removing one or several closing units.

For example, the closing portion initially may not contain any opening but constitute a closed panel. By breaking out single units, openings can be obtained.

The dimensions of the closing units may be configured such that the shape and/or size of the closing device can be adapted to the gap, such that the gap is sufficiently closed to block a human finger to enter the gap.

For example, the length of the removable closing units may not larger than a half of the width of a human finger of an adult, such that (after adaptation of the gap closing device) a remaining gap is never more than the half of the width of a human finger. Hence, the gap closing device can always be adjusted to block a human finger to enter the gap.

A length of at least one, a plurality or each of the closing units may be less than 20mm and more than 5mm, optionally less than 12mm and more than 8mm.

The lengths of the closing units may differ from each other.

The length (or length direction) may correspond to a (protrusion) direction in which the closing units or closing bars protrude from the attachment portion.

A width of at least one, a plurality or each of the closing units may be less than 10mm, optionally less than 5mm.

A width of at least one, a plurality or each of the openings between adjacent closing units may be less than 20mm, optionally less than 10mm.

A width of at least one, a plurality or each of the closing units may be less than or corresponds to the width of at least one, a plurality or each of the openings.

The width may correspond to a direction which is substantially perpendicular to the length direction and/or to a protrusion direction in which the closing units protrude from the attachment portion.

Accordingly, the width of the of the closing units and the width of the openings may be such that the closing bars of two closing devices can engage into each other, either with a play or with a frictional connection.

The closing units form segments of the closing bars which may be connected by predetermined breaking points.

Breaking points may be arranged along the closing bars between their closing units.

The material of the closing device may be tapered at the predetermined breaking points.

The breaking points may comprise at least one of:
notches or perforations of the material of the closing device, optionally a solid material, layered or laminated structures with a weak interfacial bond to allow separation under force.

The attachment portion may comprise a plurality of attachment units, each being configured to be individually removable from the closing device, wherein optionally from each attachment unit a closing bar protrudes.

Hence, also the size/shape of the attachment portion may be configurable / customizable.

At least some of the attachment units and/or the closing units may have a square form.

The attachment portion and/or the closing portion may initially have a square form (before single attachment units or closing portions are removed).

The closing device may be made of a rigid material, optionally from at least one of a plastic filled with glass fiber and a fused 3D printed metal.

The present disclosure relates in a further aspect to a gap closing system comprising: at least a first and a second gap closing device according to any one of the preceding aspects, wherein the closing units of the first gap closing device may be configured to engage and/or intersect with the closing units of the second closing device, when the first and second closing devices may be attached to opposite sides of the gap and face each other.

Accordingly, by using several gap closing devices which can engage with each other, the remaining gap or opening can be sufficiently small to block a human finger to enter. For example, the tips of the closing bars may intermesh or approach each other closely such that the gap is effectively reduced.

The closing bars of the first closing device may be configured for an alternated engagement and/or intersection with the closing bars of the second closing device.

The angles between the attachment portions and closing portions of the first and second gap closing device differ from each other.

The present disclosure relates in a further aspect to a method of closing a gap between a first component and an adjacent second component of automated laboratory system, ALS, using a gap closing device according to any one of the preceding claims, the method comprising: optionally comparing the dimensions of the closing device with that ones of the gap, removing one or more closing units from the gap closing device, such that the dimensions of the closing portion are adapted to the dimensions of the gap, attaching the attachment portion to a surface of the first component, such that the gap is at least partially closed by the gap closing device.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive for the scope as defined by the accompanied claims.

The accompanying drawings, which are incorporated in and constitute a part of this specification, illustrate examples of the disclosure and together with the description, and serve to support and illustrate the principles thereof.
Fig. 1 shows a schematic representation of an automated laboratory system according to examples of the present disclosure.
Fig. 2 shows a schematic representation of a side view of a gap closing device according to examples of the present disclosure.
Fig. 3 shows a schematic representation of a perspective view of a gap closing device according to examples of the present disclosure.
Fig. 4 shows a schematic representation of a perspective view of a gap closing system with three engaging gap closing devices according to examples of the present disclosure.
Fig. 5 shows a schematic representation of a front view of a gap closing device according to an alternative further of the present disclosure.
Fig. 6 shows a schematic representation of gap closing devices mounted to an automated laboratory system according to examples of the present disclosure.

In the following text, a detailed description of examples will be given with reference to the drawings. Various modifications to the examples may be made. In particular, one or more elements of one example may be combined and used in other examples to form new examples.

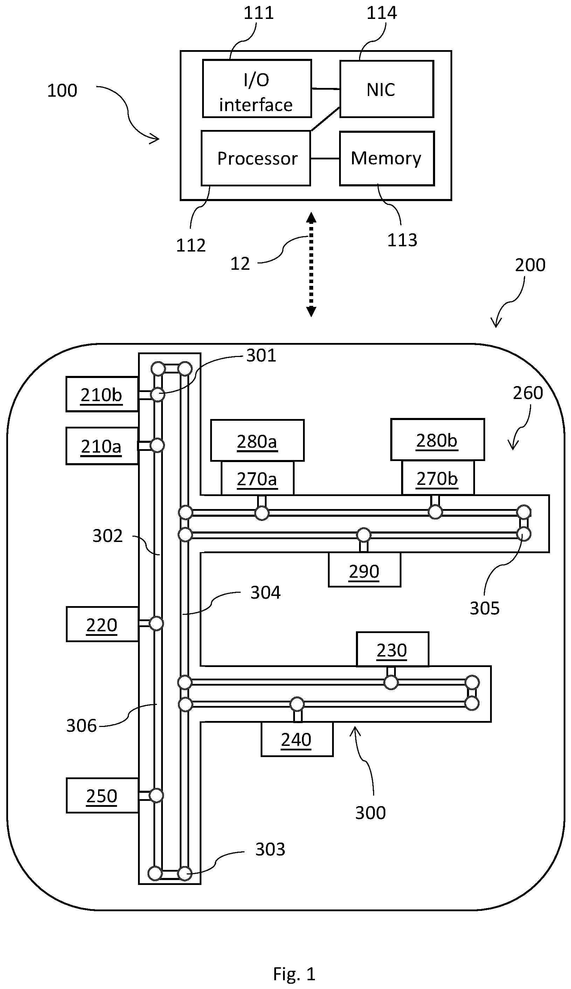

**Fig. 1** shows a schematic representation of an automated laboratory system, ALS, that may be used in some examples of the present disclosure.

The computing device 100 and the automated laboratory system (ALS) 200 may be part of a laboratory. The computing device 100 may include an input/output (I/O) interface 111, a processor 112, a memory 113, and a network interface controller 114. One or more peripheral (input or output) devices (not shown) may be connectable to the input/output interface 111.

The network interface controller 114 may be connectable to a computer network 12. The ALS 200 may also be connectable to the computer network 12. In some cases, the computing device 100 may be included in (i.e., may be part of) the ALS 200.

The ALS 200 may include a plurality of components, wherein at least some may originate from a different manufacturer or from different production series. For instance, the ALS 200 comprises a plurality of pre-processing instruments 210a, 210b, 220. In particular, the ALS comprises one or a plurality, e.g., two, input modules 210a, 210b. Each of the input modules 210a 210b may comprise a respective decapper for decapping sample containers (not shown) and/or at least a respective centrifuge for centrifuging sample containers (not shown). The ALS 200 may comprise an aliquoter 220 configured to aliquote a portion of a biological sample contained in a first sample container into one or several second sample containers.

Each input module of the plurality of the input modules 210a, 210b may comprise a respective loading area (not shown) for loading sample containers (not shown) in the ALS 200 and for identifying said containers. Moreover, each input module of the plurality of input modules 210a, 210b may comprise a respective distribution buffer (not shown), where sample containers may be positioned before being transferred on a transportation component, e.g., on a track or a belt, to be moved within the ALS 200 for processing.

The ALS 200 comprises one or more processing components (or instruments), i.e., analyzers, 230, 240, 250 for performing tests with a biological sample of a subject, e.g. a patient, contained in sample containers (not shown). For example, the ALS 200 comprises a clinical chemistry analyzer 230, an immunoassay analyzer 240 and a hematology analyzer 250.

The ALS 200 further comprises a plurality of post-processing components (or instruments) 270a, 270b, 280a, 280b, 290. In particular, the ALS may comprise a plurality of, e.g., two, recappers 270a, 270b for recapping sample containers and a plurality of, e.g., two, storage units 280a, 280b for storing sample containers.

The above-mentioned components 210a, 210b, 220, 230, 240, 250, 270a, 270b, 280a, 280b, 290 may be (at least indirectly) mechanically connected with each other via a transportation system 300 such that a sample container may be transferred from any of the above-mentioned components 210a, 210b, 220, 230, 240, 250, 270a, 270b, 280a, 280b, 290 to any other components 210a, 210b, 220, 230, 240, 250, 270a, 270b, 280a, 280b, 290 by means of the transportation system 300.

Specifically, the transportation system 300 includes a plurality of transport components 301, 302. In particular, the transport system may comprise a plurality of diverters 301, 303, 305 and a plurality of tracks and/or belts, 302, 304, 306. A diverter 301, 303, 305 is in particular a mechanical device which allows to transfer a sample container from a track and/or belt to another track and/or belt. In particular, a diverter, depending on the path that a sample container shall follow, allow for changing the direction of motion of said sample container. In Fig. 1, diverters are schematically depicted by white circles 301, 303, 305.

The transportation system 300 comprises a plurality of tracks and/or belts 302, 304, 306 for transporting sample containers e.g., in container carriers (not shown). In Fig. 1 tracks and/or belts are schematically depicted by white rectangles 302, 306 comprised between two diverters and white rectangles 304 comprised between a diverter and an instrument. In particular, the transport components are configured to move sample containers within the ALS 200. The transport components are only schematically indicated in fig. 1. The transportation system 300 may comprise more or less transport components. For example, the transportation system 300 may comprise one or more robotic grippers (not shown) and/or one or more container carriers (not shown).

A sample container may thus be transferred along a determined path from an input module 210a, 210b to one of the storage units 280a, 280b, in particular along a determined path. In particular, a path comprises one or more of the components 220, 230, 240, 250, and a plurality of the transportation components. The plurality of transportation components allows the sample container to travel in the instruments comprised in said path so that said instruments may pre-process, post-process and/or process the biological sample contained in the sample container.

Since the components of the ALS, such as the laboratory analyzers 230, 240, 250l may originate from different manufacturers and exhibit varying mechanical interfaces, residual physical and functional gaps can remain between the analyzers and the ALS components.

The present disclosure thus proposes a simple and inexpensive, yet effective and highly customizable solution to at least partially close gaps between the device, such that users can be prevented from undesirably entering the gaps with e.g. their fingers.

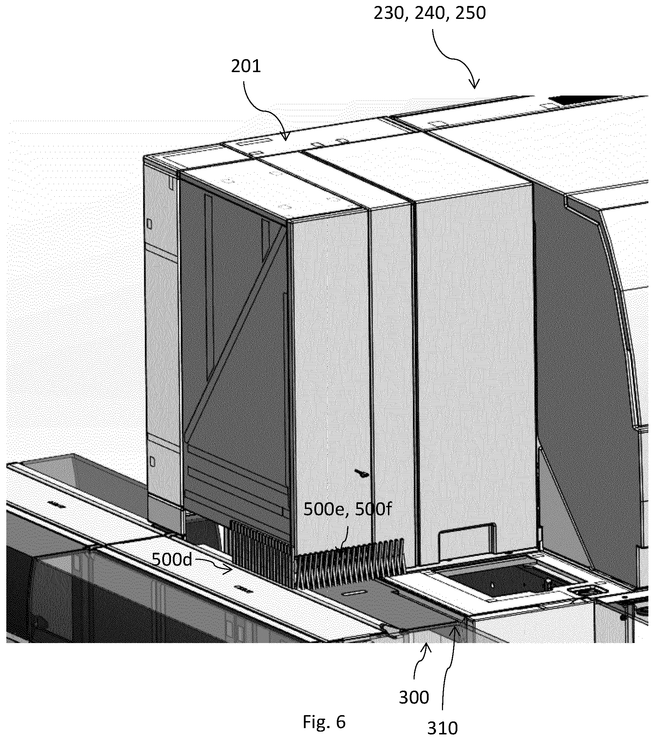

The first and second components of the ALS comprise e.g. a laboratory analyzer or a part of laboratory analyzer (such as a protection cover of the laboratory analyzer) and a transportation component for transporting a sample container across the ALS (also cf. fig. 6).

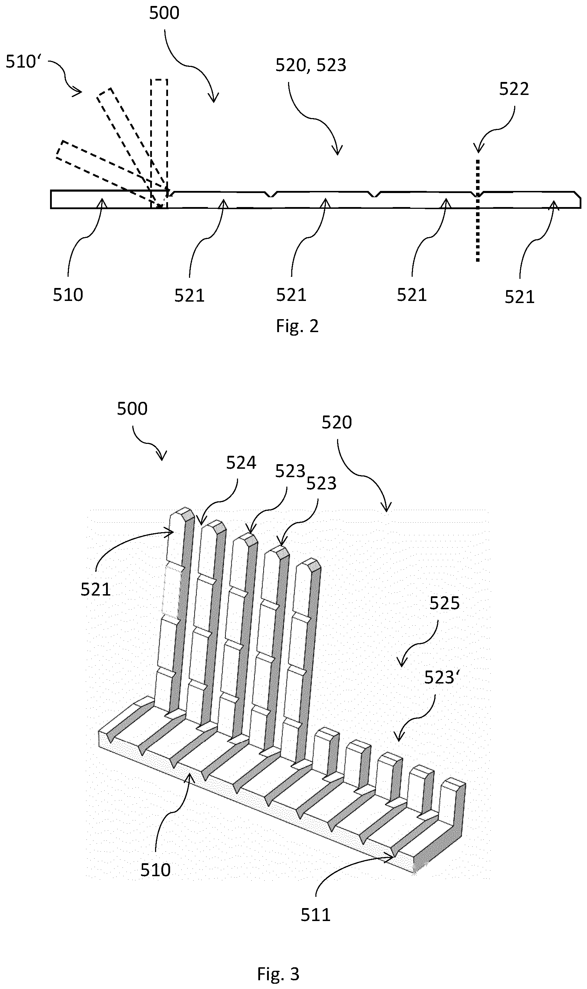

**Fig. 2** shows a schematic representation of a side view of a gap closing device according to examples of the present disclosure.

The gap closing device 500 comprises an attachment portion 510 configured to be attached to a surface of a first component of the ALS and a configurable closing portion 520 protruding from the attachment portion and comprising a plurality of closing units 521, each being configured to be removable from the gap closing device, such that the dimensions of the closing portion can be adapted to the dimensions of a gap between the first component and an adjacent second component of the ALS. Accordingly, the configurable closing portion may be adjustable to adapt to the gap by removing one or several closing units.

The closing portion 520 may substantially have a flat form and/or span a first plane. The attachment portion 510 substantially may have a flat form and/or spans a second plane. The first and second planes may be substantially parallel to each other or may be angled relative to each other (indicated by angled, i.e. inclined attachment portions 510' in fig. 2), e.g. at any value between 0 and 90°.

A plurality of closing units 521 may be attached in series to each other to form a closing bar 523 protruding from the attachment portion 510. The closing portion may also comprise a plurality of closing bars, as visible e.g. in fig. 3.

The closing units form segments of the closing bars which may be connected by predetermined breaking points 522. The breaking points may be arranged along the closing bars between their closing units. For example, the material of the closing device may be tapered at the predetermined breaking points. In this way it may be possible that the closing units can be manually removed by breaking them off at one of the breaking points.

**Fig. 3** shows a schematic representation of a perspective view of a gap closing device according to examples of the present disclosure.

The closing portion 520 may comprise a plurality of closing bars 523, each protruding from the attachment portion 510, wherein each closing bar may comprise a plurality of closing units 521 attached to each other in series. The closing bars may also be referred to as teeth or fingers. The closing bars may be substantially arranged in parallel to each other and/or perpendicular to the attachment portion 510.

The closing device may thus substantially have a comb-like shape. In other words, the attachment portion may form a base of the comb and the closing bars form teeth of the comb.

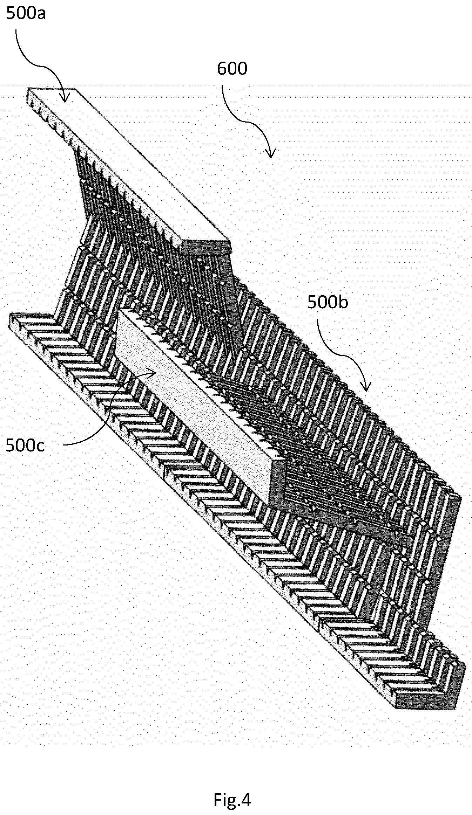

The closing bars may have chamfered ends to facilitate engagement of the bars of facing closing devices (cf. e.g. the arrangement shown in fig. 4).

The closing portion may comprise openings 524 between adjacent closing bars, i.e. a spacing. In other words, the closing units or the closing bars may be spaced to each other. The openings may allow air ventilation between the devices of the ALS for heat dissipation.

The dimensions of the closing units may be configured such that the shape and/or size of the closing device can be adapted to the gap, such that the gap is sufficiently closed to block a human finger to enter the gap. For example, the length of the removable closing units may not larger than a half of the width of a human finger of an adult, such that (after adaptation of the gap closing device) a remaining gap is never more than the half of the width of a human finger. Hence, the gap closing device can always be adjusted to block a human finger to enter the gap.

The closing units and also the closing bars may have a square form. Moreover, also the attachment portion and/or the closing portion may initially have a square form (before single attachment units or closing portions are removed). Note that in the example shown in fig. 3, several closing units have already been removed in the area 525, such that only shortened closing bars 523' remain in this area.

A length of at least one, a plurality or each of the closing units may be less than 20mm and more than 5mm, optionally less than 12mm and more than 8mm. The length (or length direction) may correspond to a protrusion direction in which the closing units or closing bars protrude from the attachment portion.

A width of at least one, a plurality or each of the closing units may be less than 10mm, optionally less than 5mm. A width of at least one, a plurality or each of the openings between adjacent closing units may be less than 20mm, optionally less than 10mm. A width of at least one, a plurality or each of the closing units may be less than or corresponds to the width of at least one, a plurality or each of the openings. The width may correspond to a direction which is substantially perpendicular to the length direction and/or to a protrusion direction in which the closing units protrude from the attachment portion. Accordingly, the width of the of the closing units and the width of the openings may be such that the closing bars of two closing devices can engage into each other, either with a play or with a frictional connection.

The attachment portion 510 may further comprise a plurality of attachment units 511, each being configured to be individually removable from the closing device, wherein optionally from each attachment unit a closing bar protrudes. Hence, also the size/shape of the attachment portion may be configurable / customizable. For example, an attachment unit with its connected closing bar may be removed from the gap closing device.

**Fig. 4** shows a schematic representation of a perspective view of a gap closing system with three engaging gap closing devices according to examples of the present disclosure.

The gap closing system 600 may comprise first and second gap closing devices 500a, 500b as described above. The closing units, in particular the closing bars, of the first gap closing device 510a may be configured to engage and/or intersect with the closing units, in particular the closing bars, of the second closing device 500b, when the first and second closing devices may be attached to opposite sides of a gap and face each other. Optionally, the gap closing system 600 may further comprise a third gap closing device 500c which engage with one of the other gap closing devices, in the shown example with gap closing device 500b. In particular, the closing bars of the first closing device may be configured for an alternated engagement and/or intersection with the closing bars of the second closing device.

Accordingly, by using several gap closing devices which can engage with each other, the remaining gap or opening can be sufficiently small to block a human finger to enter. For example, the tips of the closing bars may intermesh or approach each other closely such that the gap is effectively reduced.

As shown in the example of fig. 4, the angles between the attachment portions and closing portions of the gap closing devices may differ from each other. For example, a set of gap closing devices with different angles (or other differing configurations) may be provided, such that depending on the particular gap and the orientation of surfaces of the adjacent components of the ALS suitable gap closing devices may be selected.

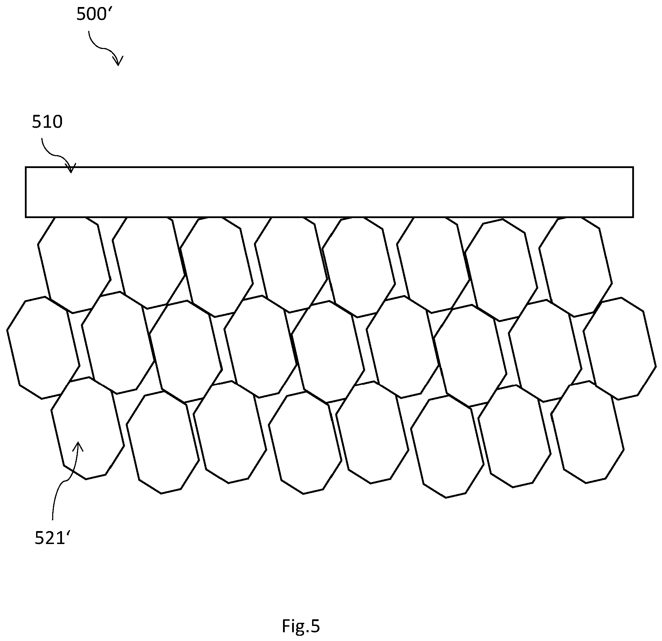

**Fig. 5** shows a schematic representation of a front view of a gap closing device according to an alternative further of the present disclosure.

In this example, the closing units 521' may form an irregular or regular and/or repeated pattern, optionally creating a network of openings. Also any other design of closing units may be possible, e.g. a series of intersecting bars grid-like meshes or honeycomb patterns.

The closing units 521' may be arranged such that openings remain between adjacent closing units 521', or such that no openings remain, i.e. that the closing units 521' form together a closed panel. However, openings in the closing portion may be obtained by removing one or several closing units.

Again, the area where adjacent closing units are connected may be provided with breaking points (not shown in fig. 5).

**Fig. 6** shows a schematic representation of gap closing devices mounted to an automated laboratory system according to examples of the present disclosure.

In particular, the gap closing devices 500d, 500e, 500f may be attached to surfaces of a laboratory analyzer, such as laboratory analyzers 230, 240, 250 (cf. fig 1). More in particular, the gap closing devices 500d, 500e, 500f may be attached to the housing 201 of a mechanical interface between transport components 300 of the ALS (e.g. a conveyor system) and the laboratory analyzer. In the housing a robotic handling system, such as a multi-axis robotic arm, may be positioned which can extract a portion (aliquot) of the biological sample from a sample container and transfer it a laboratory analyzer.

The transport components may be covered and thus protected by a cover 310. However, in the area of the housing 201 a gap may remain which has been at least partially closed by gap closing devices 500d, 500e, 500f on two different sides. It is noted that in the shown example two gap closing devices 500e, 500f are attached to opposite sides of a wall of the housing 201, such that their closing bars intermesh. However, also merely one closing device may be used depending on how small any remaining gap or openings should be.

The gap between the laboratory analyzer (first component) and the adjacent transport component (second component) may be at least partially closed using the following method:
Optionally the dimensions of the closing device may be compared with that ones of the gap.

Then one or more closing units from the gap closing device(s) may be removed, such that the dimensions of the closing portion(s) are adapted to the dimensions of the gap,
Afterwards, the attachment portion(s) of the gap closing device(s) may be attached to one or several surfaces of the first component and optionally the second component (e.g. by self-adhesive properties of the attachment surface), such that the gap is at least partially closed by the gap closing device(s).

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A gap closing device for an automated laboratory system, ALS, for closing a gap between a first component and an adjacent second component of the ALS,
comprising:
at least one attachment portion configured to be attached to a surface of the first component, such that the gap is at least partially closed by the gap closing device, and
a configurable closing portion protruding from the attachment portion and comprising a plurality of closing units, each being configured to be removable from the gap closing device, such that the dimensions of the closing portion can be adapted to the dimensions of the gap.

2. The gap closing device of claim 1, wherein
the closing portion substantially has a flat form and/or spans a first plane, and
the attachment portion substantially has a flat form and/or spans a second plane,
wherein the first and second planes are substantially parallel to each other or are angled relative to each other.

3. The gap closing device of claim 1 or 2, wherein
the closing portion comprises a plurality of closing bars, each protruding from the attachment portion, wherein each closing bar comprises a plurality of closing units attached to each other in series.

4. The gap closing device according to anyone of the preceding claims, wherein the closing units form at least one of:
a series of intersecting bars,
a regular and/or repeated pattern, optionally creating a network of openings,
a honeycomb structure, and
a grid structure.

5. The gap closing device according to anyone of the preceding claims, wherein
the closing portion comprises at least one opening between adjacent closing bars, and/or
the closing portion is configured, such that an opening in the closing portion can be obtained by removing one or several closing units.

6. The gap closing device according to anyone of the preceding claims, wherein the dimensions of the closing units are configured such that the shape and/or size of the closing device can be adapted to the gap, such that the gap is sufficiently closed to block a human finger to enter the gap.

7. The gap closing device according to anyone of the preceding claims, wherein a length of at least one, a plurality or each of the closing units is less than 20mm and more than 5mm, optionally less than 12mm and more than 8mm, and/or the lengths of the closing units differ from each other.

8. The gap closing device according to anyone of the preceding claims, wherein
a width of at least one, a plurality or each of the closing units is less than 10mm, optionally less than 5mm, and/or
a width of at least one, a plurality or each of the openings between adjacent closing units is less than 20mm, optionally less than 10mm, and/or
a width of at least one, a plurality or each of the closing units is less than or corresponds to the width of at least one, a plurality or each of the openings.

9. The gap closing device according to anyone of the preceding claims, wherein
the closing device has a one-piece design, wherein
the closing units form segments of the closing bars which are connected by predetermined breaking points, and/or
wherein breaking points are arranged along the closing bars between their closing units.

10. The gap closing device according to the preceding claim, wherein
the material of the closing device is tapered at the predetermined breaking points, and/or
the breaking points comprise at least one of:
notches or perforations of the material of the closing device, optionally a solid material,
layered or laminated structures with a weak interfacial bond to allow separation under force.

11. The gap closing device according to anyone of the preceding claims, wherein the closing device is made of a rigid material, optionally from at least one of a plastic filled with glass fiber and a fused 3D printed metal.

12. A gap closing system comprising:
at least a first and a second gap closing device according to any one of the preceding claims, wherein the closing units of the first gap closing device are configured to engage and/or intersect with the closing units of the second closing device, when the first and second closing devices are attached to opposite sides of the gap and face each other.

13. The gap closing system according to anyone of the preceding system claims, wherein
the closing bars of the first closing device are configured for an alternated engagement and/or intersection with the closing bars of the second closing device.

14. The gap closing system according to anyone of the preceding system claims, wherein
the angles between the attachment portions and closing portions of the first and second gap closing device differ from each other.

15. A method of closing a gap between a first component and an adjacent second component of automated laboratory system, ALS, using a gap closing device according to any one of the preceding claims, the method comprising:
optionally comparing the dimensions of the closing device with that ones of the gap,
removing one or more closing units from the gap closing device, such that the dimensions of the closing portion are adapted to the dimensions of the gap,
attaching the attachment portion to a surface of the first component, such that the gap is at least partially closed by the gap closing device.
